(19) Europäisches Patentamt
European Patent Office
Office européen des brevets

(11) Veröffentlichungsnummer: **0 531 819 A1**

# (12) EUROPÄISCHE PATENTANMELDUNG

(21) Anmeldenummer: **92114681.7**

(51) Int. Cl.$^5$: **C04B 35/00**

(22) Anmeldetag: **28.08.92**

(30) Priorität: **10.09.91 DE 4129952**

(43) Veröffentlichungstag der Anmeldung:
**17.03.93 Patentblatt 93/11**

(84) Benannte Vertragsstaaten:
**DE FR GB**

(71) Anmelder: **BAYER AG**

**W-5090 Leverkusen 1 Bayerwerk(DE)**

(72) Erfinder: **Ohst, Holger, Dr.**
**Im Wiesengrund 10**
**W-5068 Odental-Steinhaus(DE)**
Erfinder: **Dhein, Rolf, Dr.**
**Deswatinesstrasse 30**
**W-4150 Krefeld(DE)**
Erfinder: **Schönfelder, Lothar, Dr.**
**Am Rödlein 11**
**W-8630 Coburg(DE)**

## (54) Formmassen zur Herstellung von anorganischen Sinterformteilen sowie Verfahren zur Herstellung von anorganischen Sinterformteilen.

(57) Die Erfindung betrifft Formmassen zur Herstellung von anorganischen Sinterformkörpern, geeignet für die Spritzgußverarbeitung oder Strangpressen, sowie Verfahren zur Herstellung von anorganischen Sinterformteilen.

EP 0 531 819 A1

Die vorliegende Erfindung betrifft Formmassen zur Herstellung von anorganischen Sinterformkörpern, geeignet für die Spritzgußverarbeitung oder Strangpressen, sowie Verfahren zur Herstellung von anorganischen Sinterformteilen.

Es ist bekannt, Formteile aus anorganischen Materialien dadurch herzustellen, daß man ein Keramikpulver oder ein Metallpulver mit einem thermoplastischen Harz vermischt, die Mischung zu einem Grünkörper verformt, das thermoplastische Harz entfernt und anschließend diesen abgemagerten Grünling zu dem Formkörper versintert. Als thermoplastisches Harz beziehungsweise Bindemittel werden z.B. Polystyrol, Polypropylen, Polyethylen, Polyethylen-co-vinylacetat oder Polymethylmethacrylat eingesetzt, meist in Kombination mit Hilfsstoffen wie z.B. Stearinsäure oder Dioctylphthalat, zur Verbesserung der Gleiteigenschaften der keramischen Masse. Einen guten Überblick über den Stand der Technik geben Übersichtsartikel von M.J. Edirisinghe und J.R.G. Evans, Int. J. High Technology Ceramics 2, 1 - 31 und 249 - 278 (1986) sowie W. Michaeli, R. Bielzer, Ingenieur-Werkstoffe 2, 48 - 52 (1990) oder G. Süßmuth, R. Gadow, in: Technische Keramik (Herausgeber J. Kriegesmann), Vulkanverlag, Essen 1990, S. 207 ff.

Diese Bindemittel werden aus dem Grünling durch Erhitzen auf Temperaturen von 300 - 550 ° C entfernt. Dabei werden die Bindemittel thermisch gespalten. Es muß sehr vorsichtig und langsam auf diese Temperaturen erhitzt werden, damit der Grünling nicht durch unkontrollierten Zerfall der organischen Substanz und damit verbundener Rißbildung geschädigt wird. Aus diesem Grunde soll die Aufheizzeit nur 4 K/Stunde betragen. In der US-A 4 671 912 werden sogar niedrigere Aufheiztemperaturen von 1 bis 2 K/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Ein Weg, um die Entfernung des Bindemittels zu beschleunigen, besteht nach DE 3 926 869 A1 oder DE 40 00 278 A1 darin, Polyoxymethylen unter Säurekatalyse im Gasstrom abzubauen. Nachteilig hierbei ist die korrosive Säureatmosphäre bei Temperaturen bis zu 150 ° C, die besondere apparative Maßnahmen erfordern, und das Auftreten großer Mengen Formaldehyd als Abbauprodukt.

Ein anderer Weg besteht darin, in das Bindemittel sublimationsfähige Substanzen einzuarbeiten, die beim späteren Ausheizprozeß zuerst verdampfen und als sog. Porenbildner wirken. So ist beschrieben in JP-A 62 260 762 eine Mischung aus Polypropylen, Poly(ethylen-co-vinylacetat), Paraffin und Anthracen als sublimationsfähige Komponente. Ein ähnliches Bindemittelsystem ist in JP-A 62 260 763 beschrieben, bei dem als sublimationsfähige Komponente Terephthalsäuredimethylester eingesetzt wurde. Ein Nachteil dieser Systeme besteht jedoch darin, daß die einmal durch den Spritzguß gegebene Form nur erhalten bleibt, wenn man die Erweichungstemperatur dieses Bindemittels nicht überschreitet. Diese Temperatur ist jedoch für Polypropylen zu gering, als daß in vernünftiger Zeit große Mengen der sublimationsfähigen Komponente entweichen können.

Der vorliegenden Erfindung lag die Aufgabe zugrunde, ein Verfahren zur Herstellung eines anorganischen Güterformteiles durch Verformen eines Gemisches aus einem sinterbaren anorganischen Pulver und einem thermoplastischen Bindemittel durch Spritzgießen zu einem Grünkörper, Entfernen des Bindemittels und Sintern bereitzustellen, das die oben genannten Nachteile nicht aufweist und eine rasche Entfernung des Bindemittels aus dem Grünling ohne nachhaltige Veränderungen des Grünlings gestattet.

Es wurde nun gefunden, daS diese Aufgabe dadurch gelöst werden kann, daß man Bindemittel verwendet, die vorwiegend aus teilkristallinen Thermoplasten mit einer Schmelztemperatur > 180 ° C und weiteren niedermolekularen organischen Verbindungen bestehen.

Gegenstand der Erfindung sind daher Formmassen zur Herstellung von anorganischen Sinterformteilen, geeignet für die Spritzgußverarbeitung oder Strangpressen, die

a) ein anorganisches Pulver und

b) ein Bindersystem bestehend aus wenigstens 20 Gew.-% eines oder mehrerer teilkristallinen Thermoplasten mit einer Schmelztemperatur > 180 ° C enthalten. Bevorzugt beträgt die Schmelztemperatur 200 ° C bis 300 ° C.

Wenngleich die Erfindung gleichermaßen für die Herstellung von anorganischen Sinterformteilen aus keramischen Pulvern oder Metallpulvern geeignet ist, erfolgt die weitere Beschreibung der Erfindung am Beispiel keramischer Formmassen. Hiermit soll jedoch keinesfalls die Anwendbarkeit der Erfindung auf metallische Pulver eingeschränkt werden.

Die vorliegende Erfindung liefert viele Vorteile, unter denen besonders zu nennen sind:

Die vorliegende Erfindung liefert eine verbesserte keramische Formmasse durch Verwendung von in der Schmelze leichtfließendem Thermoplasten, so daß auch bei hohem Gehalt an keramischem oder metallischem Pulver eine noch gut thermoplastisch verarbeitbare Formmasse vorliegt.

Die vorliegende Erfindung verbesserter keramischer oder metallischer Formmasse zeichnet sich dadurch aus, daß Thermoplasten in Kombination mit weiteren niedermolekularen organischen Verbindungen als Bindersystem gut verträgliche Mischungen bilden, die zu guter Verarbeitbarkeit und gutem Ausheizverhalten führen.

Die vorliegende Erfindung verbesserter keramischer oder metallischer Formmasse zeichnet sich dadurch aus, daß die teilkristallinen Thermoplasten eine hohe Schmelztemperatur (> 180 °C) haben und somit der Ausheizprozeß bei höheren Temperaturen und damit schneller und effizienter ausgeführt werden kann als bei den üblicherweise verwendeten Plastifiziersystemen.

Weiterhin gestattet die Verwendung von Weichmachern, Gleit- und Dispergiermitteln in Mengen bis maximal 80 Gew.-% als Zusatz zum Bindersystem eine Feinabstimmung auf anwendungstechnische Bedürfnisse.

Wie bereits beschrieben betrifft die vorliegende Erfindung keramische oder metallische Formmassen, die für eine Spritzgußverarbeitung geeignet sind. Das keramische oder metallische Pulver in der Formmasse wird dabei ausgewählt im Hinblick auf die im gesinterten Formteil angestrebte Funktion, wie sie dem Fachmann bekannt ist.

Um einen gesinterten keramischen Formkörper mit exzellenten Eigenschaften zu erhalten, sollte das keramische Pulver so ausgewählt oder behandelt sein, daß eine möglichst dichte Packung der Pulverpartikel erhalten wird. Im speziellen sind die hier wichtigen Faktoren für eine gute Packung die Teilchengrößenverteilung und der Grad der Agglomeration [M.J. Edirisinghe, J.R.G. Evans; Int. J. High Technology Ceramics 2, 1 - 31 und 249 - 278 (1986)].

Die Formmassen der vorliegenden Erfindung zur Herstellung anorganischer Sinterformteile enthalten weiterhin ein Bindersystem. Die Menge des Bindersystems beträgt erfindungsgemäß weniger als 50 Gew.-%, bevorzugt 4 bis 35 Gew.-% der Gesamtmischung. Das Bindersystem hat die Aufgabe, die Struktur des geformten Teils vor dem Sintern zu erhalten.

Bevorzugt ist das erfindungsgemäße anorganische Pulver ein keramisches oder metallisches Pulver, wobei dessen Anteil wenigstens 50 Gew.-%, bevorzugt über 65 Gew.-%, der Gesamtmasse beträgt.

Bei den erfindungsgemäßen anorganischen Pulvern handelt es sich um solche aus der Gruppe der Nichtoxide Si, $Si_3N_4$, AlN, BN, SiC, $B_4C$, der Übergangsmetallcarbide, -nitride, -silicide, -bromide, aus der Gruppe der Oxide $Al_2O_3$, $ZrO_2$, $SiO_2$, $Y_2O_3$, $La_2O_3$, Seltenerdoxide, $Cr_2O_3$, $TiO_2$, Titanate, Ferrite, aus der Gruppe der Elemente B, C, Al, Si um beliebige Mischungen dieser Verbindungen oder um Mischphasen aus diesen Verbindungen oder um metallische Pulver. Außer den Pulvern können die Mischungen auch anorganische Fasern oder Whiskers enthalten, z.B. als $Al_2O_3$, SiC oder $Si_3N_4$.

Besonders bevorzugte anorganische Pulver sind Silicium und/oder Siliciumnitrid. Typische Korngrößen der anorganischen Pulver liegen im Bereich von 1 bis 50 µm.

Das Bindersystem enthält dabei als wesentlichen Bestandteil einen teilkristallines, thermoplastisch verarbeitbares Polymer mit einem Schmelzpunkt > 180 °C in einer Menge, die wenigstens 20 Gew.-% des gesamten Bindersystems ausmacht. Bevorzugte Bindemittel sind dabei Polyester und Polyamide. Besonders bevorzugt sind die Polyester. Aus diesem Grund sollen im folgenden Bindersysteme auf Polyester- und Polyamid-Basis näher erläutert werden.

Das Bindemittel der vorliegenden Erfindung sind dabei bevorzugt Polyester der allgemeinen Formel I

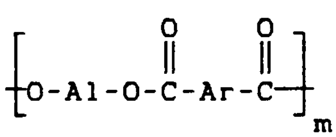

mit m = 10 bis 1000, wobei Al für ein linearen, verzweigten und/oder cycloaliphatischen Rest steht mit 2 bis 36 C-Atomen, bevorzugt jedoch $(CH_2CH_2)_n$ mit n = 1, 2 oder 3, besonders bevorzugt mit n = 1 oder 2, und Ar für einen aromatischen Rest $C_6H_4$, $C_{10}H_{12}$ stehen kann, besonders bevorzugt

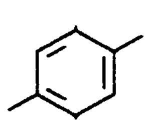 oder 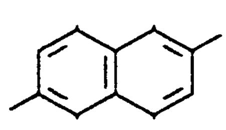 oder 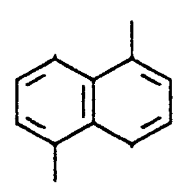

Konkret seien hier als besonders bevorzugte Polyester genannt Polyethylenterephthalat, Polybutylenterephthalat und Polyethylennaphthenat-2,6 und Poly(cyclohexandimethylenterephthalat).

Alle die hier genannten Polyester, deren Aufzählung nur beispielhaft und nicht vollständig ist, zeichnen sich durch ihre Teilkristallinität und ihre thermoplastischen Eigenschaften aus.

Dem Fachmann sind nicht nur die an sich bekannten Polyester-Typen ein Begriff, sondern er weiß auch, daß solche teilkristallinen thermoplastischen Polyester sich aufgrund der hohen Schmelztemperatur (> 180 °C) durch eine hohe Wärmeformbeständigkeit auszeichnen, sodaß auch weitere teilkristalline, hier nicht explizit genannte Polyester im erfindungsgemäßen Sinne verwendet werden können.

Die bevorzugte Menge von thermoplastisch verarbeitbaren Polyestern als Bindemittel im Bindersystem beträgt 30 bis 80 Gew.-%, besonders bevorzugt 40 - 70 Gew.-%.

In der vorliegenden Erfindung haben Polyester als Bindemittel für keramische oder metallische Formmassen mehrere Vorteile. So unterliegen Polyester definierten thermischen Zersetzungsreaktionen, bei denen als Spaltprodukte Olefine und aromatische Carbonsäuren gebildet werden. Diese definierte Zersetzungsreaktion führt zu kontrollierbaren Abbauprodukten mit einer einförmigen Freisetzung gasförmiger Komponenten, sodaß Polyester-Bindemittel ohne Störungen in der Struktur des Formkörpers entfernt werden können. Bei einer unkontrollierten Zersetzung, wie sie mit anderen Bindemitteln gewöhnlich erfolgt, ist die Gefahr von Defektstrukturen und Schwachstellen wesentlich größer.

Auch sind solche Polyester geeignet, bei speziellen Varianten des Ausheizprozesses durch katalytische Einwirkung von sauren oder basischen Gasen in Gegenwart von Wasserdampf bei erhöhten Temperaturen definiert in Alkohole und Carbonsäuren zu zerfallen.

Ein weiterer Vorteil von Polyestern als Bindemittel bei der vorliegenden Erfindung besteht darin, daß Wasser, das in der Regel adsorptiv auf der großen Oberfläche der verwendeten keramischen Pulver gebunden im Formteil vorliegt, aufgrund des gegenüber den vielfach verwendeten Polyolefinen deutlich höheren Wasseraufnahmevermögens der Polyester in dem das keramische Pulver umgebende Bindemittel gelöst werden kann.

Diese Tatsache verhindert beim Ausheizprozeß den bei Verwendung üblicher Bindemittel ansonsten auftretenden kritischen Punkt bei 100 °C, wo oft das verdampfende Wasser Defektstrukturen im Formteil erzeugt.

Die Formmassen der vorliegenden Erfindung enthalten ein Bindersystem mit einem teilkristallinen thermoplastischen Polyester als wesentliche Komponente und weiterhin eines oder mehrerer Additive in unterschiedlichen Kombinationen.

Solche Additive können Netzmittel (Trialkoxysilane, Polyalkoxysilane, Fettsäuren wie Palmitin- oder Stearinsäure, Polyethylenoxide u.a.), Plastifizierhilfsmittel (Wachse wie Fettsäureester oder Fettsäureamide, oligomere Polyethylene, Paraffine, Weichmacher wie Dialkyladipat, Dibutylphthalat, Dioctylphthalat, Butylbenzylphthalat, N-Butylphenylsulfonamid u.a.) oder andere Hilfsmittel, die die rheologischen Eigenschaften und das Entformungsverhalten (Pentaerythrittetrastearat u.a. Fettsäureester, Silikonöle) der Mischungen bei der Verarbeitung günstig beeinflussen, enthalten und sind dem Fachmann in großer Breite bekannt.

Weiterhin können Ester, Alkohole oder Carbonsäuren als Additive eingesetzt werden, die aufgrund ihrer hohen Funktionalität (wenigstens drei Alkohol- bzw. Carbonsäurefunktionen) durch Umesterung mit den teilkristallinen Polyestern durch Umesterungsreaktionen eine Vernetzung der Polyester bewirken können und so während des Ausheizprozesses die Wärmeformbeständigkeit des Formkörpers auch über den Schmelzpunkt des teilkristallinen Polyesters hinaus erhalten.

Beispiele für zur Vernetzung durch Umesterung geeignete Additve sind: Ester auf Basis von Glycerin, Trimethylpropan, Pentaerythrit, Furanose, Glucose sowie Cellulose oder Stärke oder Polyvinylalkohol wie Glycerintristearat, Trimethylolpropantristearat, Pentaerythrittristearat, Pentaerythrittetrastearat, Pentaerythrittetrapalmitat, Cellulosetriacetat, Celluloseacetobutyrat, Cellulosepropionat.

Weiterhin können auch andere Vernetzer als Additive eingesetzt werden wie Hexamethoxymethylenmelamin oder Hexabutoxymelamin.

Auch sind Vernetzer auf Basis von Molekülen mit wenigstens drei Carbonsäuregruppen einsetzbar, um aus diesen in freier Form oder als Ester durch Umesterung eine Vernetzung des teilkristallinen Thermoplasten zu bewirken, z.B. Zitronensäure, Homo- oder Copolymere der Acrylsäure bzw. Methacrylsäure oder ihrer Ester wie Methylmethacrylat oder Butylacrylat oder auch Copolymere mit Maleinsäureanhydrid als Baustein.

Naturgemäß bevorzugte Additive sind hierbei niedermolekulare Ester, die über eine gute Verträglichkeit zur Polyestermatrix verfügen. Beispielhaft seien hier genannt Di(2-ethylhexyl)-phthalat, Phthalsäuredialkylester, Adipinsäuredialkylester, Fettsäureester wie Palmitinsäurestearat, Stearinsäuremyristat oder Montansäureester, Glyoxalsäurediethylester sowie monomere oder oligomere Carbonate wie Bis(pentadeylphenyl)-carbonat, Bis(nonylphenyl)-carbonat, oligomeres Ethylencarbonat oder oligomeres Propylencarbonat oder oligomeres Hexandiolcarbonat.

Als besonders bevorzugt eignen sich Phthalsäureester als Additive für die erfindungsgemäßen keramischen Formmassen. Die niedermolekularen Ester bzw. Mischungen davon machen hierbei vorteilhaft 10 bis 60 Gew.-% des Bindersystems aus. Andere oben erwähnte Additive werden in der Regel bis zu 20 Gewichtsteilen dem Bindersystem zugesetzt, bevorzugt jedoch in Mengen unter 10 Gew.-%.

Geeignete Bindemittel für die vorliegenden Erfindungen sind weiterhin Polyamide der allgemeinen Formel II

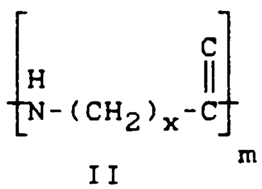

mit $x = 2 - 11$
und $m = 10 - 1000$

II

besonders bevorzugt Polyamid 6 ($x = 5$), Polyamid 11 ($x = 10$) und Polyamid 12 ($x = 11$).

Oder mit der allgemeinen Formel III

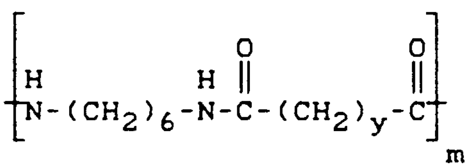

mit $y = 4 - 12$
und $m = 10 - 1000$

besonders bevorzugt Polyamid 46 ($y = 2$), Polyamid 66 ($y = 4$), Polyamid 610 ($y = 8$), Polyamid 612 ($y = 10$).

Alle die hier genannten Polyamide, deren Aufzählung nur beispielhaft und nicht vollständig ist, zeichnen sich durch Teilkristallinität aus.

Dem Fachmann sind nicht nur die an sich bekannten Polyamid-Typen ein Begriff, sondern er weiß auch, daß solche teilkristallinen thermoplastischen Polyamide sich aufgrund der hohen Schmelztemperatur durch eine hohe Wärmeformbeständigkeit auszeichnen, so daß auch weitere teilkristalline, hier nicht explizit genannte Polyamide im erfindungsgemäßen Sinne verwendet werden können.

Die bevorzugte Menge von thermoplastisch verarbeitbaren Polyamiden als Bindemittel im Bindersystem beträgt 20 bis 80 Gew.-%, besonders bevorzugt 40 bis 70 Gew.-%.

In der vorliegenden Erfindung haben Polyamide als Bindemittel für keramische Formmassen mehrere Vorteile. So haben insbesondere Polyamide der allgemeinen Formel II die Eigenschaft, durch thermische Rückspaltung wieder in ihre monomere Einheiten zu zerfallen, z.B. spaltet ein Polyamid 6 thermisch zurück in $\epsilon$-Caprolactam. Eine solche Rückspaltung in das Monomer nach einem "Reißverschluß"-Mechanismus bei thermischer Belastung führt zu genau definierten und kontrollierbaren Abbauprodukten mit einer einförmigen Entwicklung gasförmiger Komponenten, so daß das Polyamid-Bindemittel ohne Störungen in der Struktur des Formkörpers entfernt werden kann. Bei einer unkontrollierten Zersetzung, wie sie mit anderen Bindemitteln gewöhnlich erfolgt, ist die Gefahr von Defektstrukturen und Schwachstellen wesentlich höher.

Besonders bevorzugt als teilkristallines thermoplastisches Polyamid im Bindersystem ist somit Polyamid-6.

Ein weiterer Vorteil von Polyamiden als Bindemittel bei der vorliegenden Erfindung besteht darin, daß Wasser, das in der Regel adsorptiv auf der großen Oberfläche der verwendeten keramischen Pulver gebunden im Formteil vorliegt, aufgrund des hohen Wasseraufnahmevermögens der Polyamide in dem das keramische Pulver umgebende Bindemittel gelöst werden kann.

Diese Tatsache verhindert beim Ausheizprozeß den bei Verwendung üblicher Bindemittel ansonsten auftretenden kritischen Punkt bei 100 °C, wo oft das verdampfende Wasser Defektstrukturen im Formeil erzeugt.

Die keramischen Formmassen der vorliegenden Erfindung enthalten ein Bindersystem mit Polyamid als wesentliche Komponente und weiterhin 10 bis 70 Gew.-% eines oder mehrerer niedermolekularer Additive. Bevorzugte Additive sind hierbei Phenole.

Dem Fachmann ist bekannt, daß Polyamide und Phenole miteinander gut verträgliche Mischungen ausbilden (siehe z.B. DE-A 3 610 595 bzw. DE-A 3 934 711). Diese Phenole wirken als Porenbildungskomponenten in der ersten Phase des Ausheizprozesses. Aus diesem Grund werden solche Phenole, die bei einer Temperatur unterhalb des Schmelzpunktes des Polyamids noch einen für einen schnellen Ausheizprozeß ausreichenden Dampfdruck besitzen. Beispiele für solche die Erfindung betreffende Phenole sind:

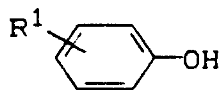 , 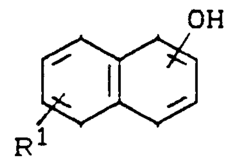

mit $R^1 = H, CH_3, C_2H_5 ... C_{20}H_{41}$
oder Aryl ($C_6H_5$)

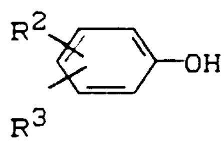

mit $R^2$ und $R^3$ unabhängig
voneinander $C_1$-$C_{20}$-Alkyl

Beispiele für Bisphenole sind:

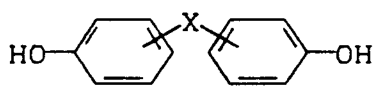

mit $x = 0, CO, CH_2, CH(CH_3), C(CH_3)_2$

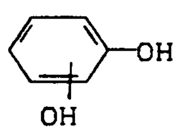 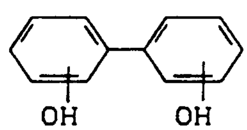

Bevorzugt werden monofunktionelle Phenole, besonders Orthophenylphenol, Nonylphenol, Octylphenol, Dodecylphenol und Pentadecylphenol, in einer Menge von 20 bis 60 Gew.-% dem Bindersystem zugegeben, bi- und mehrfunktionelle Phenole, besonders Biphenol A, Hydrochinon, p,p'-Dihydroxydiphenyl, werden bevorzugt in einer Menge von 5 bis 25 Gew.-% dem Bindersystem zugegeben.

Auch kann es vorteilhaft sein, Mischungen solcher Phenole einzusetzen, um aufgrund unterschiedlicher Dampfdrucke der entsprechenden Phenole ein kontinuierliches Ausheizen über einen größeren Temperaturbereich hinweg zu gewährleisten.

Die Formmassen der vorliegenden Erfindung können zusätzlich zu den bereits genannten Hauptkomponenten (anorganisches Pulver, Polyamide, Phenole) noch zusätzliche monomere oder oligomere organische Substanzen in unterschiedlichen Kombinationen enthalten, deren Anteil am Bindersystem bis zu 50 Gew.-% betragen kann.

Solche Additive können Netzmittel (Trialkoxysilane, Fettsäuren wie Palmitin- oder Stearinsäure, Polyethylenoxide u.a.), Plastifizierhilfsmittel (Wachse wie Fettsäureester oder Fettsäureamide, olipomere Polyethylene, Paraffine, Weichmacher wie Dialkyladipat, Dibutylphthalat, Butylbenzylphthalat, N-Butylphenylsulfonamid u.a.) oder andere Hilfsmittel, die die rheologischen Eigenschaften und das Entformungsverhalten (Pentaerythrittetrastearat u.a. Fettsäureester, Silikonöle) der Mischungen bei der Verarbeitung günstig

beeinflussen, enthalten und sind dem Fachmann in großer Breite bekannt.

Weiterhin können Amine, Isocyanate, Carbonsäuren, Anhydride, Alkohole oder Ester eingesetzt werden, die aufgrund ihrer hohen Funktionalität (wenigstens drei funktionelle Gruppen) durch Reaktion mit den teilkristallinen Polyamiden eine Vernetzung der Polyamide bewirken können und so während des Ausheizprozesses die Wärmeformbeständigkeit des Formkörpers auch über den Schmelzpunkt des teilkristallinen Polyamids hinaus erhalten.

Gegenstand dieser Erfindung ist weiterhin ein Verfahren zur Herstellung der keramischen Sinterformteile. Dies ist gekennzeichnet durch die Schritte

a) Mischen der anorganischen Pulver mit dem Bindersystem zur Herstellung von keramischen oder metallurgischen Formmassen entsprechend der vorliegenden Erfindung,

b) Spritzgießen dieser Mischungen,

c) Ausheizen der spritzgegossenen Mischung und

d) Sintern der Mischung, aus dem das gesamte Bindersystem in dem Ausheizschritt c) nahezu vollständig entfernt wurde.

Hierzu kann das keramische Pulver mit den Komponenten des Bindersystems bei Raumtemperatur vorgemischt werden. Die endgültige Herstellung der keramischen Formmasse erfolgt durch Anwenden von Scherkräften in einem Kneter und/oder Extruder bei Temperaturen von 200 bis 290 °C, je nach Zusammensetzung der Formmasse. Anschließend kann die keramische Formmasse abkühlen gelassen und granuliert werden.

Für die Verformung durch Spritzguß können die üblichen Schnecken- oder Kolbenspritzgußmaschinen eingesetzt werden und die Formmassen bei Temperaturen von 180 bis 290 °C und Drucken von 400 - 1800 bar in eine Form, die auf 40 - 140 °C gehalten wird, verformt werden. Nachdruck wird auf die Formmasse solange ausgeübt, bis diese durch Abkühlen erstarrt ist. Dies dauert typischerweise 2 bis 60 Sekunden.

Die entformten Grünlinge (oder Grünkörper) werden erfindungsgemäß aufgeheizt, um das Bindersystem, d.h. den polymeren Binder und alle mehr oder weniger flüchtigen Additive, schrittweise zu entfernen. Dieser Aufheizprozeß kann unter Luft oder einem Gemisch aus Wasserdampf und sauren (z.B. HCl, $HNO_3$, HCOOH) bzw. basischen (z.B. $NH_3$, $N(CH_3)_3$) Gasen oder Schutzgasatmosphäre und/oder vermindertem Druck (1060 bis 0,1 mbar) durchgeführt werden. Obwohl Aufheizgeschwindigkeit und Endtemperatur von der Menge und Art der einzelnen Komponenten des Bindersystems und der Charakteristik (i.w. Geometrie) des Formkörpers abhängig sind, können als bevorzugte Aufheizraten 5 -150 K pro Stunde genannt werden. Als vorteilhaft kann sich hierbei eine zusätzliche Haltestufe bei 180 bis 200 °C für einen Zeitraum von 2 bis 24 Stunden erweisen.

Die Endtemperaturen des Ausheizvorgangs sollte wenigstens 350 °C, bevorzugt jedoch 400 bis 450 °C betragen.

Im Anschluß hieran kann die Temperatur weiter erhöht werden, auf das zum Sintern des keramischen Pulvers benötigte Temperaturniveau. Die Höhe der Endtemperatur schwankt selbstverständlich je nach Art des verwendeten keramischen Pulvers und der Gestalt des Formteils. Allgemein kann die Temperaturerhöhung nach Ausbrennen des Bindersystems mit eine Geschwindigkeit von 50 bis 1000 K pro Stunde erfolgen, bis die gewünschte Endtemperatur in einem Bereich von 1000 bis 2000 °C erreicht worden ist.

Für ein vollständiges Sintern des keramischen Pulvers wird der Formkörper bei der erreichten Endtemperatur für 15 Minuten bis 24 Stunden gehalten. Allgemein wird das Sintern durchgeführt in einer Atmosphäre aus Luft, Sauerstoff, Stickstoff oder einem inerten Gas.

Die erfindungsgemäßen keramischen Formmassen sowie das Verfahren, daraus durch Spritzgießen und thermische Nachbehandlung keramische Formkörper herzustellen, haben den Vorteil leicht fließfähiger und somit gut thermoplastisch verarbeitbarer keramischer Formmassen in Kombination mit deutlich kürzeren Ausheizzeiten des Bindersystems unter Erhalt fehlerfreier keramischer Formteile.

Die folgenden Beispiele sollen die Erfindung illustrieren; dabei bleibt jedoch die Erfindung keinesfalls auf die genannten konkreten Details beschränkt.

Beispiele 1 - 9:

90,0 g (30 Gew.Teile) verschiedener Bindersysteme werden jeweils mit 210,0 g (70 Gew.Teile) eines Si-Pulvers mit einer mittleren Korngröße von 2 µm vermischt und in einem Laborkneter zu einem Granulat verarbeitet. Diese Granulate wurden jeweils in einer Spritzgußmaschine zu Stäbchen mit den Abmessungen 80 x 10 x 4 mm verarbeitet.

Die Stäbchen wurden mit einer Rate von 10 °C/Stunde aufgeheizt, mit einer Haltestufe von 12 Stunden bei 200 °C. Der Gewichtsverlust nach Erreichen der Endtemperatur von 450 °C betrug in allen Fällen mehr als 29 Gew.-% entsprechend einer nahezu vollständigen Entfernung des Bindersystems.

Die Qualität der ausgeheizten Grünlinge wurde optisch kontrolliert auf Risse, Blasen oder andere Fehlstellen, die Ergebnisse in folgender Tabelle zusammengefaßt.

Aus den fehlerfreien Prüfkörpern wurden in einem anschließenden Sinter- und Nitridierungsprozeß ebenfalls fehlerfreie $Si_3N_4$-Formkörper als keramische Fertigteile erhalten.

Zusammensetzung Bindersystem 1)

| Beispiel 2) | Bindemittel PBT | Additive | | | |
|---|---|---|---|---|---|
| | | Dibutylphthalat | Dioctyladipat | Pentaerythrittetrastearat | Polyhexandiolcarbonat |
| 1* | 60 | 20 | 20 | - | - |
| 2 | 60 | 19 | 19 | 2 | - |
| 3* | 60 | - | - | 2 | 38 |
| 4* | 60 | 19 | 19 | 2 | - |
| 5 | 60 | 38 | - | 2 | - |
| 6 | 60 | - | 38 | 2 | - |
| 7 | 50 | 24 | 24 | 2 | - |
| 8 | 40 | 29 | 29 | 2 | - |
| 9 | 30 | 34 | 34 | 2 | - |

* Bei diesen Beispielen betrug die Einwaage der keramischen Formmassen 75,9 g (25,3 Gew.Teile) Bindersystem und 224,1 g (74,7 Gew.Teile) Si-Pulver. Nach dem Ausheizen des Bindersystems betrug der Gewichtsverlust jeweils mehr als 25 %.

1) Alle Angaben als Gewichtsteile

2) In allen Beispielen 1-9 zeigten die ausgeheizten Grünkörper weder Blasen noch Risse noch Verformungen.

Beispiele 10 - 17:

78,6 g (26 Gew.Teile) verschiedener Bindersysteme werden jeweils mit 221,4 g (74 Gew.Teile) eines Si-Pulvers mit einer mittleren Korngröße von 2 µm vermischt und in einem Laborkneter zu einem Granulat verarbeitet. Diese Granulate wurden jeweils in einer Spritzgußmaschine zu Stäbchen mit den Abmessungen 80 x 10 x 4 mm verarbeitet.

Die Stäbchen wurden mit einer Rate von 10 ° C/Stunde aufgeheizt, mit einer Haltestufe von 12 Stunden bei 200 ° C. Der Gewichtsverlust nach Erreichen der Endtemperatur von 450 ° C betrug in allen Fällen mehr als 29 Gew.-% entsprechend einer nahezu vollständigen Entfernung des Bindersystems.

Die Qualität der ausgeheizten Grünlinge wurde optisch kontrolliert auf Risse, Blasen oder andere Fehlstellen, die Ergebnisse in folgender Tabelle zusammengefaßt.

Aus den fehlerfreien Prüfkörpern wurden in einem anschließenden Sinter- und Nitridierungsprozeß ebenfalls fehlerfreie $Si_3N_4$-Formkörper als keramische Fertigteile erhalten.

| Beispiel[1)] | bestehend aus Bindemittel Polyamid 6 | Niedermolekulares Phenol Ortho-Phenyl phenol | Niedermolekulares Phenol Bisphenol A | Niedermolekulares Phenol Nonyl-phenyl | Additive Hoechst E-Wachs | Additive Octadecyl-tris-ethoxy-silan |
|---|---|---|---|---|---|---|
| 10 | 50 | 25 | | - | 25 | - |
| 11 | 50 | | 25 | - | 25 | - |
| 12 | 40 | 30 | | - | 30 | - |
| 13[2)] | 30 | | 35 | - | 35 | - |
| 14 | 50 | 5 | 20 | - | 25 | - |
| 15[2)] | 50 | 10 | 40 | - | - | - |
| 16 | 49 | 25 | - | - | 25 | 1 |
| 17 | 50 | - | - | 50 | - | - |

1) In allen Beispielen mit Ausnahme der Beispiele 13 und 15 zeigten die ausgeheizten Grünkörper keine Risse oder Blasen.

2) Bei den Grünkörpern der Beispiele 13 und 15 traten während des Ausheizens der Grünkörper Blasenbildung und Verformung auf.

Beispiel 18

Die gemäß Beispiel 4 und 7 hergestellten Grünkörper wurden mit einer Rate von 2,5 K/min bis 200°C aufgeheizt, dann mit einer Rate von 1,7 K/min auf 250°C und zuletzt werden mit einer Rate von 2,5 K/min

bis auf 450 ° C aufgeheizt. Der Gewichtsverlust nach Erreichen der Endtemperatur von 450 ° C betrug für den gemaß Beispiel 4 hergestellten ausgeheizten Grünkörper 25 Gew.-% und für den gemäß Beispiel 7 hergestellten ausgeheizten Grünkörper mehr als 29 Gew.-%.

Die Qualität der ausgeheizten Grünlinge wurde optisch und mikroskopisch kontrolliert. In beiden Fällen waren an den ausgeheizten Grünkörpern keine Fehlstellen erkennbar.

Beispiele 19 bis 23

Ein Bindersystem bestehend aus 60 Gew.-Teilen eines Polybutylenterephthalats, 19 Gew.-Teilen Dibutylphthalat, 19 Gew.-Teilen Dioctyladipat und 2 Gew.-Teilen Pentaerythrittetrastearat wurde mit verschiedenen (je nach spezifischer Dichte des anorganischen Pulvers) Gewichtsteilen eines anorganischen Pulvers vermischt, in einem Laborkneter zu einem Granulat verarbeitet und schließlich in einer Spritzgußmaschine zu Grünkörpern mit den Abmessungen 80 x 10 x 4 mm verarbeitet.

Zusammensetzung der Formmassen:

| Bsp. | anorganisches Pulver | mittlere Korngröße | Gew.-Teile Pulver | Gew.-Teile Bindersystem |
|---|---|---|---|---|
| 19 | $Al_2O_3$ | ca. 0,5 µm | 82,0 | 18,0 |
| 20 | $S_3N_4$ | ca. 0,5 µm | 79,6 | 20,4 |
| 21 | W | ca. 0,4 µm | 95,9 | 4,1 |
| 22 | W | ca. 10 µm | 95,9 | 4,1 |
| 23 | Al | ca. 50 µm | 76,0 | 24,0 |

Die Stäbchen wurden mit einer Rate von 10 K/Stunde bis 450 ° C aufgeheizt und dann abkühlen gelassen. In allen Fällen entsprach der Gewichtsverlust einem Entfernen von mehr als 95 Gew.-% des Bindersystems. Alle ausgeheizten Grünlinge zeigten weder optisch erkennbare Risse oder Blasen oder Verformungen.

**Patentansprüche**

1. Formmassen zur Herstellung von anorganischen Sinterformteilen, geeignet für die Spritzgußverarbeitung oder Strangpressen, dadurch gekennzeichnet, daß sie
   a) ein anorganisches Pulver und
   b) ein Bindersystem bestehend aus wenigstens 20 Gewichtsteilen eines oder mehrerer teilkristalliner Thermoplasten mit einer Schmelztemperatur > 180 ° C, bevorzugt 200 bis 300 ° C, enthalten.

2. Formmassen gemäß Anspruch 1, dadurch gekennzeichnet, daß der Anteil des Bindersystems unter 50 Gew.-%, bevorzugt 4 bis 35 Gew.-%, der Gesamtmasse beträgt.

3. Formmassen gemäß einem der Ansprüche 1 oder 2, dadurch gekennzeichnet, daß das anorganische Pulver ein keramisches oder metallisches Pulver ist und sein Anteil wenigstens 50 Gew.-%, bevorzugt über 70 Gew.-%, der Gesamtmasse beträgt.

4. Formmassen gemäß einem oder mehreren der Ansprüche 1 bis 3, durch gekennzeichnet, daß die teilkristallinen Thermoplaste im Bindersystem Polyester oder Polyamide sind.

5. Formmassen gemäß Anspruch 4, dadurch gekennzeichnet, daß die teilkristalline thermoplastische Polyester Poly(ethylenterephthalat) oder Poly(butylenterephthalat) oder Poly(ethylennaphthenat) oder Poly(cyclohexan-1,4-dimethylenterephthalat) sind.

6. Formmassen gemäß Anspruch 5, dadurch gekennzeichnet, daß im Bindersystem wenigstens 10 Gew.-% bis 70 Gew.-% Phthalsäureester sind.

7. Formmassen gemäß Anspruch 4, dadurch gekennzeichnet, daß das teilkristalline thermoplastische Polyamid im Bindersystem Polyamid-6 ist.

**8.** Formmassen gemäß Anspruch 7, dadurch gekennzeichnet, daß im Bindersystem wenigstens 10 Gew.-% bis 70 Gew.-% eines oder mehrerer niedermolekularer Phenole sind.

**9.** Formmassen gemäß Anspruch 3, dadurch gekennzeichnet, daß es sich bei den organischen Pulvern um solche aus der Gruppe der Nichtoxide Si, $Si_3N_4$, AlN, BN, SiC, $B_4C$, der Übergangsmetallcarbide, -nitride, -silicide, -boride, aus der Gruppe der Oxide $Al_2O_3$, $ZrO_2$, $SiO_2$, $Y_2O_3$, $La_2O_3$, Seltenerdoxide, $Cr_2O_3$, $TiO_2$, Titanate, Ferrite, aus der Gruppe der Elemente B, C, Al, Si um beliebige Mischungen dieser Verbindungen oder um Mischphasen aus diesen Verbindungen oder um metallische Pulver handelt.

**10.** Formmassen gemäß Anspruch 9, dadurch gekennzeichnet, daß das keramische Pulver aus Silicium und/oder Siliciumnitrid.

**11.** Formmassen gemäß einem oder mehreren der Ansprüche 1, 2, 3, 4, 5 , 6, 7 oder 8, dadurch gekennzeichnet, daß das Bindersystem außer den teilkristallinen thermoplastischen Polymeren weitere noch monomere oder oligomere organische Verbindungen enthält.

**12.** Formmassen gemäß Anspruch 11, dadurch gekennzeichnet, daß die monomeren oder oligomeren organischen Verbindungen wenigstens drei zur Reaktion mit dem teilkristallinen Thermoplasten befähigte Gruppen enthalten.

**13.** Verfahren zur Herstellung von anorganischen Sinterformteilen, dadurch gekennzeichnet, daß
a) eine Formmasse zur Herstellung von anorganischen Sinterformteilen gemäß beliebigen Ansprüchen 1 - 11 hergestellt wird,
b) eine Formgebung durch Spritzgußverarbeitung erfolgt,
c) ein Ausheizen des Bindersystems aus der spritzgegossenen Form erfolgt,
d) die Formmasse gesintert wird.

**14.** Verfahren gemäß Anspruch 8, dadurch gekennzeichnet, daß das Bindersystem entfernt wird durch Ausheizen mit einem Temperaturanstieg von 5 bis 150 K/Stunde bis auf 450 ° C.

**15.** Verfahren gemäß Anspruch 9, dadurch gekennzeichnet, daß im Temperaturbereich von 180 bis 200 ° C der Temperaturanstieg für bis zu 24 Stunden unterbrochen wird.

Europäisches Patentamt

# EUROPÄISCHER RECHERCHENBERICHT

Nummer der Anmeldung

EP 92 11 4681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 329 475 (SANYO CHEMICAL INDUSTRIES LTD.)<br>* Seite 3, Zeile 22 - Zeile 23; Ansprüche *<br>* Seite 6, Zeile 43 - Seite 10, Zeile 2 *<br>--- | 1-5,7, 9-10,13 | C04B35/00 |
| A | EP-A-0 426 243 (T&N TECHNOLOGY LTD.)<br>* das ganze Dokument *<br>--- | 1,7 | |
| A | US-A-4 349 503 (S.M.AHARONI)<br>* das ganze Dokument *<br>--- | 1,2,4,5 | |
| A | DATABASE WPIL<br>Week 8149,<br>Derwent Publications Ltd., London, GB;<br>AN 81-90097D<br>& JP-A-56 136 838 (DAI NIPPON) 26. Oktober 1981<br>* Zusammenfassung *<br>--- | 1,4-6 | |
| A | WO-A-8 908 124 (EASTMAN KODAK CO.)<br>--- | | **RECHERCHIERTE SACHGEBIETE (Int. Cl.5 )** |
| A | DATABASE WPIL<br>Week 8609,<br>Derwent Publications Ltd., London, GB;<br>AN 86-058696<br>& JP-A-561 010 067 (MITSUBISHI METAL KK) 17. Januar 1986<br>* Zusammenfassung *<br>----- | | C04B<br>C08K |

Der vorliegende Recherchenbericht wurde für alle Patentansprüche erstellt

| Recherchenort | Abschlußdatum der Recherche | Prüfer |
|---|---|---|
| DEN HAAG | 14 DEZEMBER 1992 | HARBRON J.L. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)